# FASCICULE DE BREVET EUROPEEN

(11) **EP 4 076 089 B1**
(45) Date de publication et mention de la délivrance du brevet: **06.08.2025**
(21) Numéro de dépôt: 20789156.5
(22) Date de dépôt: 13.10.2020
(51) Int. Cl.: A47B 47/04, F16B 12/12, A47B 87/02

(54) **MEUBLE MODULAIRE ET EVOLUTIF**
MODULARES UND ERWEITERBARES MÖBEL
MODULAR AND CONVERTIBLE FURNITURE

(30) Priorité: 20.12.2019 FR 1915036
(43) Date de publication de la demande: 26.10.2022
(73) Titulaire: Chennaux, Alain, 1180 Bruxelles (BE); Chennaux, Odile, 1190 Bruxelles (BE)
(72) Inventeur: Chennaux, Alain, 1180 Bruxelles (BE); Chennaux, Odile, 1190 Bruxelles (BE)
(74) Mandataire: Argyma
(86) Numéro de dépôt international: PCT/EP2020/078781
(87) Numéro de publication internationale: WO 2021/121712

(56) Documents cités:
- EP-A2- 1 645 713
- US-A- 4 232 916
- US-A1- 2008 302 279
- US-B2- 10 016 056

## Description

### DOMAINE TECHNIQUE

Le domaine de l'invention de la présente demande est celui des meubles ou étagères de rangement ou de présentation d'objets divers et variés, tels que des livres - il s'agit alors de bibliothèques -, de bibelots - il s'agit alors de vitrines ou de présentoirs -, de flacons de parfum - il s'agit alors de pianos -, etc. Plus particulièrement, les meubles en question comportent une pluralité de modules qui sont montés coulissants sur des planches - planchers, plafonds ou intercalaires - pour pouvoir ainsi modifier et faire évoluer la structure de rangement ou de présentation de ces meubles.

Plus globalement, le domaine de l'invention est donc celui des meubles de rangement et de présentation d'objets qui sont modulaires et susceptibles d'évolution par coulissement, le long de deux planches basse et haute présentant, chacune, deux bords avant et arrière, de modules comportant des bords avant et des bords arrière bas et haut, ces planches et modules étant agencés pour assurer le guidage des modules le long des planches.

De tels meubles sont décrits dans le brevet belge 2018/5324.

La réalisation et le montage des modules et des planches de cet art antérieur ne sont pas des plus aisés.

Le document US 4 232 916 A divulgue un meuble assemblé par coulissement des éléments constitutifs.

### PRESENTATION DE L'INVENTION

Les inventeurs ont donc cherché, pour réaliser une structure de rangement modulaire et évolutive facile à fabriquer et à faire évoluer, une solution particulièrement simple et c'est ainsi qu'ils proposent l'invention de la présente demande qui consiste en un meuble modulaire et évolutif selon la revendication 1.

Il faut d'emblée ici préciser que le matériau des planches et du module, qui peut être par exemple du métal, est avantageusement du bois ou un autre matériau pouvant être découpé et usiné.

Dans le cas où seulement l'un des bords des planches comporte une nervure, les planches peuvent être indifféremment une planche basse ou une planche haute, selon qu'on les présente avec la nervure tournée vers le haut ou vers le bas, étant entendu que les planches devront être tournées pour que leur nervure soit celle d'un bord arrière.

Avec une seule nervure, formant, de profil, avec la planche un L, ladite planche pourra être une planche basse ou une planche haute, mais alors, dans ce dernier cas, sans autre planche supplémentaire au-dessus de cette planche haute, pour ne former qu'un ensemble à un module ou une seule rangée de modules.

Si le meuble doit comporter au moins deux rangées de modules superposées et séparées par une planche intermédiaire, alors, cette planche intermédiaire comporte deux nervures longitudinales en saillie, perpendiculaires aux surfaces planes de cette planche, dans le prolongement l'une de l'autre et formant, de profil, avec la planche un T.

Les nervures longitudinales en saillie hors des planches peuvent avoir un flanc coplanaire avec la tranche du bord des planches ou être en retrait par rapport à cette tranche.

Selon l'invention, la paroi de fond étant assemblée au bord arrière de la paroi latérale, le module est échancré selon deux rainures longitudinales formées respectivement dans les bords bas et haut de la paroi de fond et se prolongeant dans les bords bas et haut de sa paroi latérale pour coopérer avec les nervures des planches basse et haute.

Bien sûr, le module peut comporter deux parois latérales assemblées à la paroi de fond, les caractéristiques ci-dessus s'appliquant naturellement mutatis mutandis à cette forme de réalisation, le module comportant ainsi deux parois latérales pourvues, chacune, de deux bords bas et haut, et une paroi de fond arrière présentant deux bords bas et haut et assemblée aux parois latérales. Dans ce cas, et la paroi de fond étant assemblée aux bords arrière des parois latérales, le module peut être échancré selon deux entailles formées respectivement dans au moins un des bords bas et haut de ses deux parois latérales, de profondeur égale à la hauteur des nervures en saillie des planches, de préférence à proximité de sa paroi de fond, et alignées parallèlement à la paroi de fond.

Dans le cas où le module ne comporte qu'une seule paroi latérale, il est préférable que la paroi de fond soit assemblée à la paroi latérale en deçà de son bord arrière.

Avantageusement, dans ce dernier cas, le matériau du module étant de préférence en bois, le module comporte, dans le dièdre arrière d'assemblage de la paroi de fond et de la paroi latérale, un contrefort s'étendant entre les bords haut et bas des parois de fond et latérale et échancré selon deux entailles longitudinales formées respectivement dans ses bords haut et bas et se prolongeant, dans le bord arrière de la paroi latérale, en saillie hors de la paroi de fond, en haut et en bas, pour coopérer avec les nervures des planches haute et basse.

Dans ce cas, il est préférable que le bord de la paroi de fond, opposé à son bord d'assemblage avec la paroi latérale, soit pourvu d'une barrette échancrée en haut et en bas, de coopération avec les nervures des planches haute et basse, la barrette s'étendant au droit du contrefort.

Dans le cas où le module ne comporte qu'une seule paroi latérale, avec une paroi de fond disposée en deçà du bord arrière de la paroi latérale, et où son matériau est en métal, les deux parois peuvent être soudées l'une à l'autre ou formées d'une seule pièce pliée.

La présente demande concerne également un meuble comportant plus de deux planches et/ou au moins deux modules.

### PRESENTATION DES FIGURES

L'invention sera mieux comprise à la lecture de la description suivante de plusieurs formes de réalisation du meuble de l'invention, en référence au dessin en annexe sur lequel
Fig. 1 est une vue en perspective de dessus et du côté gauche d'une forme de réalisation du meuble de l'invention, à une seule rangée de deux modules d'une première forme de réalisation entre deux planches basse et haute d'une première forme de réalisation ;
Fig. 2 est une vue du côté gauche du meuble de la figure 1 ;
Fig. 3 est une vue en perspective de dessus d'un des modules du meuble de la figure 1, à deux parois latérales et paroi de fond assemblée aux bords arrière des parois latérales ;
Fig. 4 est une vue partielle du côté droit d'une deuxième forme de réalisation d'une planche du meuble de l'invention ;
Fig. 5 est une vue du côté gauche d'une troisième forme de réalisation d'une planche du meuble de l'invention ;
Fig. 6 est une vue en perspective de dessus d'une deuxième forme de réalisation d'un module du meuble de l'invention, à deux parois latérales et paroi de fond assemblée aux bords arrière des parois latérales ;
Fig. 7 est une vue en perspective de dessus d'une troisième forme de réalisation d'un module du meuble de l'invention, à une seule paroi latérale, à paroi de fond assemblée à la paroi latérale en deçà de son bord arrière, et en bois ;
Fig. 8 est une vue en perspective de dessus d'une quatrième forme de réalisation d'un module de meuble de l'invention en métal, à une seule paroi latérale, à paroi de fond soudée au bord arrière de la paroi latérale ;
Fig. 9 est une vue en perspective de dessus d'une cinquième forme de réalisation d'un module du meuble de l'invention en métal, à une seule paroi latérale et paroi de fond formées d'une seule pièce et
Fig. 10 est une vue en perspective de dessus d'une sixième forme de réalisation d'un module du meuble de l'invention en métal, à une seule paroi latérale, à paroi de fond emboîtée dans le bord arrière replié de la paroi latérale.

### DESCRIPTION DETAILLEE DE L'INVENTION

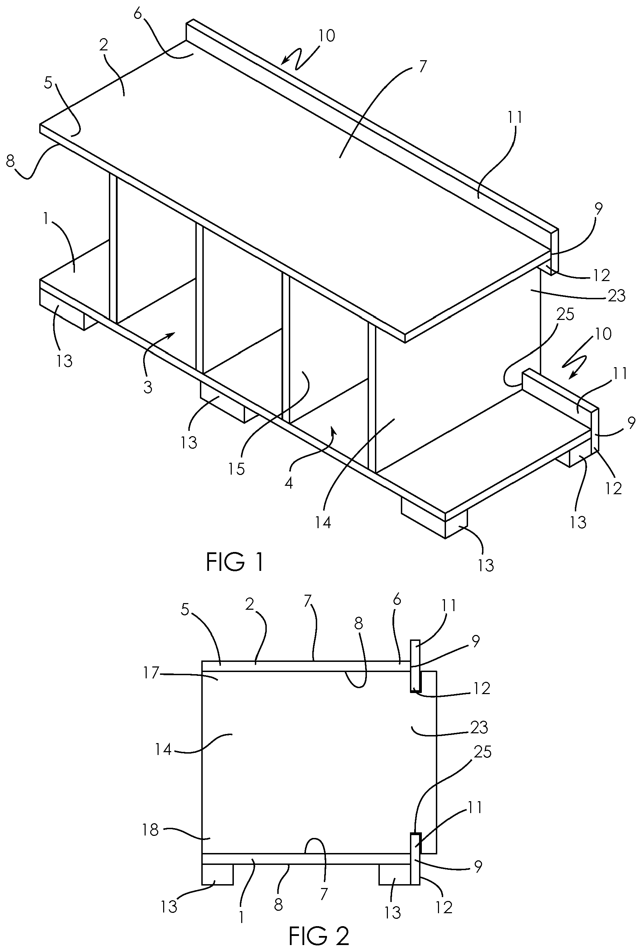

Le meuble modulaire, et évolutif comme précisé plus loin, de la figure 1 comporte, entre une planche basse 1 et une planche haute 2, une seule rangée de deux modules 3 et 4. Les planches et les parois des modules sont ici en bois.

Chaque planche 1, 2 comporte un bord avant 5 et un bord arrière 6, délimitant deux surfaces planes parallèles 7, 8.

Contre toute la tranche 9 du bord arrière 6 des planches 1, 2 est fixée une lamelle mince 10, ici aussi en bois, en saillie vers le haut et vers le bas perpendiculairement aux surfaces planes 7, 8 des planches 1, 2. Au plan fonctionnel, chaque lamelle 10 est formée de deux demi-lamelles dans le prolongement l'une de l'autre et formant des nervures longitudinales supérieure 11 et inférieure 12 en saillie perpendiculaire aux surfaces planes 7, 8 des planches 1, 2. De profil, les deux nervures 11, 12 de chaque lamelle 10 forment, avec la planche à laquelle elles sont fixées, un T. Les lamelles sont de préférence fixées à leur planche par collage.

On remarquera que si la planche haute 2 du meuble de la figure 1 comporte une nervure supérieure 11, c'est pour pouvoir éventuellement servir de planche intermédiaire en transformant le meuble de la figure 1 en un meuble à deux rangées de modules, ou plus, la planche 2 devenant la planche basse pour supporter les modules de la deuxième rangée.

Si l'on fait abstraction de cette nervure supérieure, qui, en l'occurrence, n'est effectivement pas utile, la nervure inférieure 12 forme, de profil, avec la planche 2 un L.

De même, la nervure inférieure 12 de la planche basse 1 n'est ici pas non plus utile. C'est donc par commodité et simplicité que les lamelles 10 ont été fixées aux planches.

Pour le cas où l'on ne fixerait qu'une seule nervure (une demi-lamelle) aux planches, il est intéressant de noter qu'on peut indifféremment les fixer en nervure inférieure ou supérieure, puisqu'il suffirait de faire pivoter les planches autour d'un axe orthogonal à leur nervure pour transformer une nervure inférieure en nervure supérieure, et inversement, et donc transformer une planche haute en planche basse, toute nervure devant restée fixée au bord arrière des planches.

Dans le cas d'une planche pourvue d'une seule nervure inférieure, comme on le comprendra facilement plus loin, la planche ne peut être qu'une planche haute d'un meuble à une seule rangée de modules.

Le meuble de la figure 1 comporte des sabots d'appui sous la planche basse 1 qui ont été prévus pour améliorer l'assise du meuble et tenir compte du fait que cette planche basse comporte également une nervure inférieure 12, une série de sabots 13 étant plaqués contre cette nervure et le bord arrière 6 de la planche, d'autres sabots 13 étant fixés sous le bord avant 5 de la planche, les sabots 13 ayant bien entendu la même hauteur que la nervure 12.

Chaque module 3, 4 comporte ici une paroi latérale gauche 14, une paroi latérale droite 15 et une paroi de fond arrière 16.

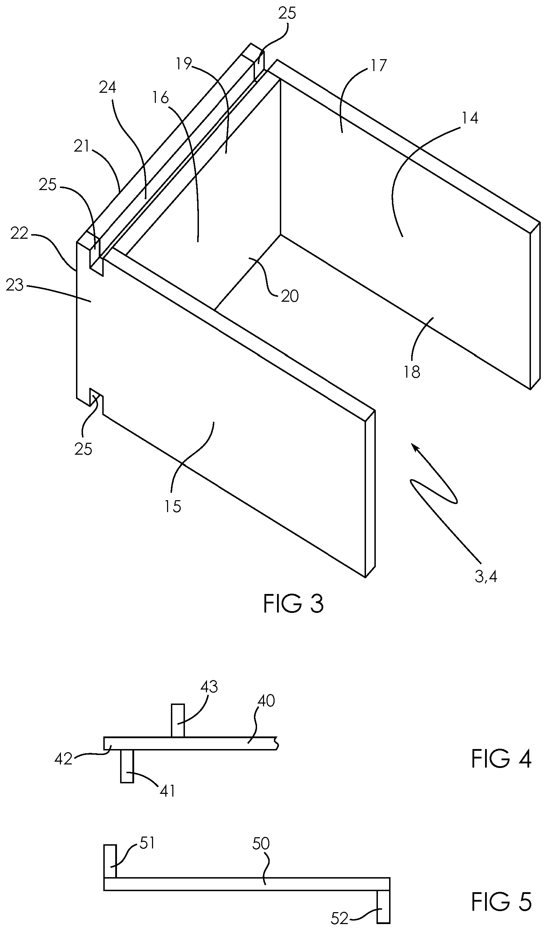

Chaque paroi latérale comporte un bord haut 17 et un bord bas 18. De même, la paroi de fond arrière 16 comporte un bord haut 19 et un bord bas 20. Les deux parois latérales 14, 15, par leur bord arrière vertical 23, sont assemblées à la paroi de fond arrière 16. Cette structure est clairement visible sur la figure 3.

L'assemblage des trois parois des modules 3, 4 peut s'effectuer de différentes manières. Tout d'abord et ici, elles sont collées entre elles.

En l'espèce, la paroi de fond arrière 16 est disposée entre les deux parois latérales, la face arrière 21 de la paroi de fond étant coplanaire avec les tranches arrière 22 des bords arrière verticaux 23 des parois latérales 14, 15. On pourrait également disposer la face avant de la paroi de fond contre ces tranches arrière.

Les modules 3, 4 sont échancrés longitudinalement, c'est-à-dire dans le sens de la longueur du meuble, et donc dans le sens de la longueur des planches 1, 2, et perpendiculairement aux parois latérales 14, 15.

Une échancrure a été ménagée aussi bien dans la paroi de fond arrière 16 que dans les deux parois latérales 14, 15.

Dans la paroi de fond arrière 16, une rainure 24 a été creusée dans les bords haut 19 et bas 20. Ces rainures 24 ont sensiblement la même épaisseur que les lamelles 10 et une profondeur sensiblement égale à la hauteur des nervures 11, 12.

Les rainures 24 sont prolongées dans les parois latérales 14, 15 par des entailles 25 ménagées ici dans leurs bords haut 17, bas 18 et arrière vertical 23. Les entailles 25 ont la même épaisseur et la même profondeur que les rainures 24.

Ainsi, les parois 14, 15, 16 des modules 3, 4 peuvent s'encastrer sur les nervures 11, 12 des planches 1, 2 et coulisser le long de ces nervures. Les modules peuvent être placés où l'on souhaite. Ils peuvent, sans toucher à leur structure, être déplacés après la première pose et c'est pourquoi le meuble est qualifié de modulaire et évolutif.

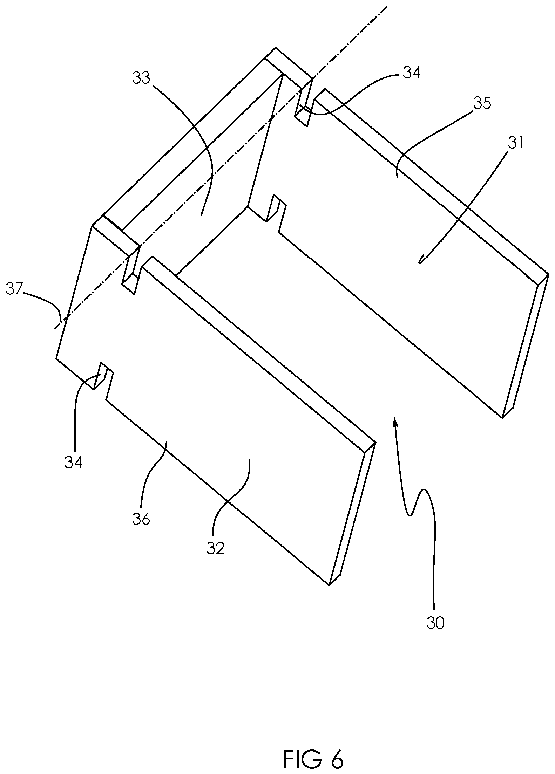

Le module 30 de la figure 6 ne se distingue de celui de la figure 3 que par ses échancrures. Il comporte deux parois latérales 31, 32 et une paroi de fond arrière 33. La paroi de fond 33 ne comporte pas de rainure. Seules des entailles 34 ont été creusées dans les bords haut 35 et bas 36 des parois latérales, en-deçà de la paroi de fond. Les entailles du haut et du bas sont respectivement alignées entre elles parallèlement à la paroi de fond, pour, en fait, former des rainures partielles, ou disloquées, le long des lignes 37.

Les entailles 34 ont les mêmes dimensions que les entailles 25 des modules 3, 4. Le module 30 peut s'encastrer sur les nervures 11, 12 des planches 1, 2, mais décalé vers l'arrière par rapport aux modules 3, 4.

En pratique, de nombreuses dispositions des échancrures et rainures dans les modules et des nervures sur les planches peuvent être envisagées.

Ainsi, si les nervures 11, 12 des planches 1, 2 du meuble de la figure 1 ont leur flanc avant coplanaire avec la tranche 9 du bord arrière 6 des planches, il est parfaitement permis de fixer ces nervures en retrait par rapport à cette tranche, c'est-à-dire en-deçà vers l'avant.

Selon la configuration du meuble que l'on veut réaliser, tout est possible.

On peut, par exemple, prévoir une rainure dans un des bords haut et bas de la paroi de fond, prolongée par des entailles dans les parois latérales et, sans rainure dans l'autre des bords de la paroi de fond, creuser des entailles dans les bords, bas ou haut, des parois latérales, opposés au bord rainuré de la paroi de fond.

Des variantes restant dans le cadre de l'invention définie par les revendications annexées sont également possibles sur les planches supports des modules du meuble de l'invention de la figure 1.

La figure 4 représente la partie arrière d'une planche 40 avec, respectivement sur les deux faces planes de la planche, une nervure inférieure 41, à proximité de son bord arrière 42, destinée à s'encastrer dans les rainures des modules disposés en-dessous de la planche, et une nervure supérieure 43, décalée vers l'avant par rapport à la rainure inférieure 41, destinée à être encastrée dans des rainures ou entailles de modules disposés au-dessus. Dans ce cas, la planche 40 est une planche intermédiaire d'un meuble à au moins deux rangées de modules.

La figure 5 représente une planche 50 avec, respectivement sur ses deux faces, une nervure supérieure, ou inférieure, arrière, ou avant, 51 et une nervure inférieure, ou supérieure, avant, ou arrière, 52, selon la disposition de la planche dans le meuble. Dans ce cas, la planche 50 est une planche intermédiaire entre deux rangées de modules ouverts en sens inverses, les uns vers l'avant du meuble, les autres, vers l'arrière.

On remarquera que les nervures 51, 52 ont un flanc coplanaire avec la tranche des bords de planche.

Les nervures 41, 43 de la planche 40 et les nervures 51, 52 de la planche 50, de profil, forment avec leur planche 40, 50 un L.

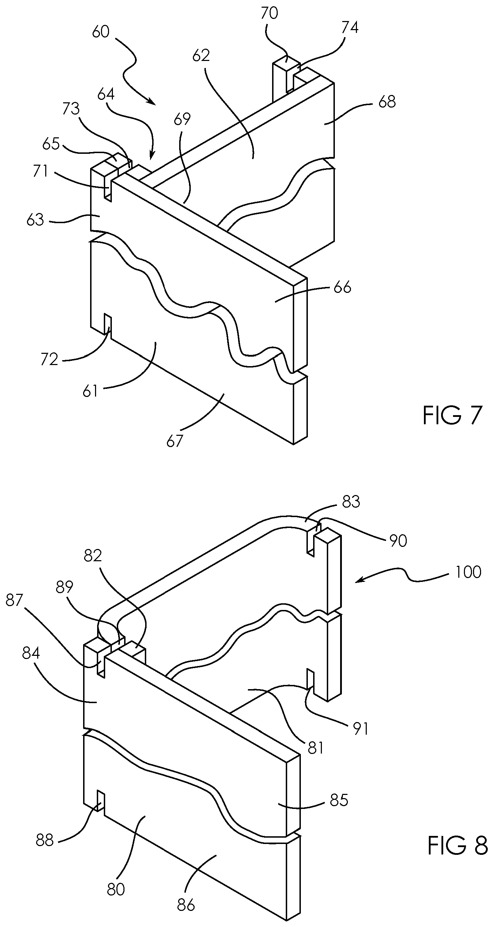

Le module 60 de la figure 7, en bois, se distingue des modules précédemment décrits par le fait qu'il ne comporte qu'une paroi latérale 61 et une paroi de fond 62 disposée en deçà du bord arrière vertical 63 de la paroi latérale 61.

Les deux parois 61, 62, une fois assemblées, forment un dièdre arrière d'assemblage 64 dans lequel est fixé un contrefort 65, en forme de poutrelle à section rectangulaire, s'étendant entre les bords haut et bas de la paroi latérale (66, 67) et de la paroi de fond.

En outre, le bord vertical 68 de la paroi 62, opposé à son bord vertical d'assemblage 69 est pourvu, ici sur tout son long, d'une barrette 70 de coopération avec les nervures des planches haute et basse 2, 1. La barrette 70 s'étend au droit de la poutrelle contrefort 65.

Le bord arrière 63 de la paroi latérale 61, en saillie hors de la paroi de fond 62, comporte deux entailles longitudinales 71, 72 ménagées dans les bords haut 66 et bas 67 de la paroi latérale, qui se prolongent par des entailles 73 et 74 ménagées en partie haute (ainsi qu'en partie basse) de la poutrelle contrefort 65 et de la barrette 70, respectivement alignées entre elles, pour former longitudinalement, c'est-à-dire parallèlement à la planche de fond 62, des rainures partielles, ou disloquées, de coopération avec les nervures des planches 1, 2. Les entailles 71-74 sont de mêmes dimensions que les entailles des modules des figures 1-3, 6.

Le module 100 de la figure 8 est en métal et composé de deux parois latérale 80 et de fond 81, soudées l'une à l'autre.

La paroi de fond 81 comporte un rebord gauche d'assemblage 82 et un rebord, droit 83, opposé à la paroi latérale 80, les deux rebords étant ici repliés sensiblement à angle droit vers l'avant par rapport à la paroi de fond, rebords par l'un 82 desquels la paroi de fond 81 est soudée au bord arrière vertical 84 de la paroi latérale 80. Dans l'exemple de la figure 8, la paroi de fond 81 s'étend directement perpendiculairement au bord arrière 84 de la paroi latérale 80.

Comme dans les modules précédemment décrits, les bords haut 85 et bas 86 du bord arrière 84 de la paroi latérale 80 et les bords haut et bas des deux rebords 82, 83 de la paroi de fond 81 comportent respectivement des entailles 87-91 de mêmes dimensions et disposées et alignées de la même manière que les entailles des modules précédemment décrits pour coopérer de la même manière avec les nervures des planches 1, 2.

On remarquera que la réalisation du module 100 est relativement facile, par découpe de deux parois, pliage et soudage.

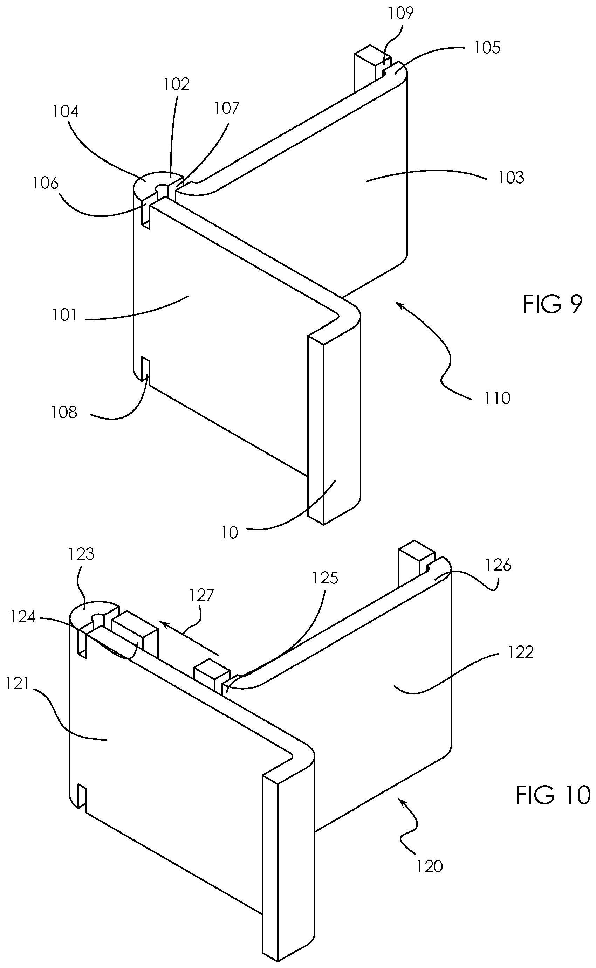

Le module 110 de la figure 9 se distingue du module de la figure 8 par le fait qu'il est encore plus facile à réaliser, puisqu'une seule découpe de plaque suffit. Donc dans une même et unique plaque 110, on réserve d'abord une première paroi, formant paroi latérale 101 du module, puis, au-delà de cette paroi latérale, après un premier pliage sensiblement à 180° sur une petite portion de la plaque, on forme une épaisse arête de pliage et de renfort 102, arrière et latérale, puis, au-delà de cette arête, après un deuxième pliage sensiblement à 90°, on forme la paroi de fond 103 du module, ainsi disposée en deçà du bord arrière vertical 104 de l'arête 102, formant également le bord arrière de la paroi latérale 101. Les deux parois 101, 103 sont donc réunies par l'arête de pliage 102.

Le bord vertical 105, opposé au bord 102, de la paroi de fond 103 a été replié sensiblement à 90° vers l'arrière pour former une barrette 105 disposée en regard de l'arête 102 et prolongeant la paroi de fond 103.

Dans l'exemple de la figure 9, on a également replié, sensiblement à 90°, le bord avant vertical 105, opposé au bord arrière 104 de la paroi latérale 101, à titre de stabilisation du module.

Comme dans le module 100 de la figure 8, on a ménagé dans les bords haut et bas de la paroi latérale 101, de l'arête 102 et de la barrette 105 des entailles 106-109, de mêmes dimensions et de même disposition que celles des autres modules précédemment décrits, pour exercer les mêmes fonctions d'échancrure et de coopération avec les nervures des planches 1, 2.

On a décrit plusieurs formes de réalisation des modules du meuble de l'invention, avec des assemblages particuliers de paroi de fond et de parois latérales. Bien entendu, ces assemblages ne doivent pas être considérés comme limitatifs. D'autres assemblages restant dans le cadre de l'invention définie par les revendications annexées sont parfaitement possibles. Par exemple, l'assemblage d'une paroi de fond et d'une paroi latérale pourrait être réalisé par emboîtement du bord arrière d'une paroi latérale dans une encoche formée dans un bord latéral de la paroi de fond, réalisée par trois pliures à 90° si le module est en métal, ou par emboîtement d'un bord latéral de la paroi de fond replié à 90° dans une encoche formée dans le bord arrière de la paroi latérale, réalisée par deux pliures à 90° si le module est en métal.

Ainsi, le module 120 de la figure 10, également en métal, est composé d'une paroi latérale 121 et d'une paroi de fond 122, tout d'abord séparées, comme dans le module 100 de la figure 8, puis réunies par emboîtement pour présenter une configuration très similaire à celle du module 110 de la figure 9. C'est une forme de réalisation particulièrement simple à réaliser.

La paroi latérale 121 comporte un bord arrière vertical 123 qui a été replié vers l'avant suivant deux pliures à 90° pour former une gorge verticale 124 dans laquelle un bord latéral vertical 125, ici gauche, replié à 90° de la paroi de fond et vers l'arrière, doit être glissé, ou emboîté (127), pour solidariser les deux parois.

L'autre bord latéral vertical 126, ici droit, de la paroi de fond 122 a également été replié à 90° de la paroi de fond et vers l'arrière, au droit de l'autre bord 125.

Comme dans les modules 100 et 110, des entailles ont été formées pour assurer les mêmes fonctions.

## Revendications

1. Meuble modulaire et évolutif comportant, au moins entre deux planches basse (1) et haute (2) présentant, chacune, deux bords avant (5) et arrière (6), au moins un module (3 ; 4) avec au moins une paroi latérale (14, 15), pourvues de deux bords bas (18) et haut (17), et une paroi de fond arrière (16) présentant deux bords bas (20) et haut (19) et assemblée à la paroi latérale (14, 15), les planches (1, 2) et le module (3 ; 4) étant agencés pour permettre le coulissement et le guidage du module (3 ; 4) le long des planches (1, 2) de manière à placer le au moins un module où l'on souhaite après une première pose dudit au moins module, sans toucher à sa structure, rendant le meuble modulaire et évolutif, meuble tel que
- les planches (1, 2) présentent deux surfaces planes parallèles (7, 8),
- au moins un des bords (5, 6) de chaque planche (1, 2) comporte une nervure longitudinale (11 ; 12) en saillie perpendiculaire à ses surfaces planes (7, 8), et
- le module (3 ; 4) est échancré (24, 25) longitudinalement et perpendiculairement à sa paroi latérale (14, 15) pour pouvoir s'encastrer sur les nervures (11 ; 12) des planches (1, 2) et ainsi coulisser le long de ces nervures (11 ; 12).

2. Meuble selon la revendication 1, dans lequel un seul bord de planche (6) comporte une nervure (11 ; 12).

3. Meuble selon l'une des revendications 1 et 2, dans lequel les nervures (41, 43 ; 51, 52) et leur planche (40 ; 50) forment, de profil, un L.

4. Meuble selon la revendication 3, dans lequel la planche (2), formant de profil un L avec sa nervure (12), est une planche haute et le meuble ne comporte qu'une seule rangée de modules (3 ; 4).

5. Meuble selon l'une des revendications 1 et 2, dans lequel il est prévu, sur au moins l'une des planches (1, 2), deux nervures longitudinales supérieure (11) et inférieure (12) en saillie, perpendiculaires aux surfaces planes (7, 8) de ladite une planche (1, 2), dans le prolongement l'une de l'autre et parties d'une lamelle (10) formant, de profil, avec ladite une planche (1, 2) un T.

6. Meuble selon l'une des revendications 1 et 2, dans lequel il est prévu, sur au moins l'une des planches (40 ; 50) deux nervures (41, 43 ; 51, 52) fixées respectivement sur les deux faces de ladite une planche et décalées l'une par rapport à l'autre.

7. Meuble selon la revendication 6, dans lequel les deux nervures (41, 43) sont fixées à proximité du bord arrière (42) de ladite une planche.

8. Meuble selon l'une des revendications 1 à 5, dans lequel les nervures (10, 11, 12) ont un flanc avant coplanaire avec la tranche (9) du bord arrière (6) des planches.

9. Meuble selon l'une des revendications 1 à 8, dans lequel, la paroi de fond (16) étant assemblée au bord arrière (23) de la paroi latérale (14, 15), le module est échancré selon deux rainures longitudinales (24) formées respectivement dans les bords bas (20) et haut (19) de la paroi de fond (16) et se prolongeant dans les bords bas (18) et haut (17) de sa paroi latérale (14, 15) pour coopérer avec les nervures (11, 12) des planches basse et haute (1, 2).

10. Meuble selon l'une des revendications 1 à 9, dans lequel le module (3 ; 4) comporte deux parois latérales (14, 15), pourvues, chacune, de deux bords bas (18) et haut (17), et une paroi de fond arrière (16) présentant deux bords bas (20) et haut (19), et assemblés aux parois latérales (14, 15), le module (3 ; 4) étant échancré (24, 25) longitudinalement et perpendiculairement à ses parois latérales (14, 15).

11. Meuble selon la revendication 10, dans lequel le module (3 ; 4) est échancré selon au moins une rainure longitudinale (24) de coopération avec une nervure (11 ; 12), formée dans la paroi de fond (16) et prolongée par des entailles (25) dans les parois latérales (14, 15) de coopération avec une nervure (11 ; 12).

12. Meuble selon la revendication 11, dans lequel il est prévu deux rainures (24) dans les bords haut (19) et bas (20) de la paroi de fond (16) du module (3 ; 4), prolongées par des entailles (25) dans les parois latérales (14, 15).

13. Meuble selon la revendication 11, dans lequel les parois latérales (14, 15) du module (3 ; 4) comportent des entailles (34) de coopération avec une nervure de planche (11 ; 12).

14. Meuble selon la revendication 10, dans lequel le module (30) n'est échancré que par des entailles (34) formées dans les parois latérales (31, 32) du module.

15. Meuble selon l'une des revendications 1 à 9, dans lequel, le module (60 ; 100 ; 110) ne comportant qu'une seule paroi latérale (61 ; 80 ; 101), la paroi de fond (62 ; 81 ; 103) est assemblée à la paroi latérale en deçà de son bord arrière (63 ; 84 ; 104).

16. Meuble selon la revendication 15, dans lequel le module (60) comportant un dièdre arrière (64) d'assemblage de la paroi de fond (62) et de la paroi latérale (61), une poutrelle contrefort (65) s'étend dans le dièdre entre les bords haut et bas de la paroi de fond (62) et de la paroi latérale (61, 66, 67), la poutrelle (65) étant échancrée selon deux entailles longitudinales (64) formées respectivement dans ses bords haut et bas et se prolongeant (71, 72) dans le bord arrière (63) de la paroi latérale (61), en saillie hors de la paroi de fond (62) pour coopérer avec les nervures (11, 12) des planches haute et basse (2, 1).

17. Meuble selon la revendication 16, dans lequel le bord (68) de la paroi de fond (62), opposé à son bord (69) d'assemblage avec la paroi latérale (61), est pourvu d'une barrette (70) s'étendant au droit de la poutrelle contrefort (65) et agencé pour coopérer avec les nervures (11, 12) des planches haute et basse (2, 1) par des échancrures haute et basse (74).

18. Meuble selon l'une des revendications 1 à 17, dans lequel les planches (1, 2) et le module (3, 4 ; 30 ; 60) sont en bois.

19. Meuble selon la revendication 15, dans lequel la paroi latérale (80) et la paroi de fond (81) sont en métal et soudées l'une à l'autre.

20. Meuble selon la revendication 19, dans lequel la paroi de fond (81) s'étend directement perpendiculairement au bord arrière (84) de la paroi latérale (80) et comporte, opposé à la paroi latérale (80), un rebord (83) replié sensiblement à angle droit vers l'avant par rapport à la paroi de fond (81).

21. Meuble selon la revendication 15, dans lequel la paroi latérale (101) et la paroi de fond (103) sont formées dans une même plaque en métal.

22. Meuble selon la revendication 21, dans lequel la plaque de fond (103) s'étend en deçà du bord arrière vertical (104) de la paroi latérale (101) et d'une arête de pliage (102) réunissant les deux parois (101, 103).

23. Meuble selon la revendication 22, dans lequel la paroi de fond (103) est prolongée par une barrette de stabilisation (105), repliée sensiblement à 90° vers l'arrière et disposée en regard de l'arête de pliage (102), la paroi latérale (101), l'arête de pliage (102) et la barrette de stabilisation (105) sont pourvues d'entailles (106-109) de coopération avec les nervures des planches (1, 2).

24. Meuble selon l'une des revendications 1 à 17, dans lequel les planches et le module sont en matériau métallique.

25. Meuble selon l'une des revendications 1 à 24, comportant plus de deux planches et au moins deux modules.

26. Meuble selon l'une des revendications 1 à 9, dans lequel, le module (120) en métal et ne comportant qu'une seule paroi latérale (121), la paroi de fond (122) est assemblée à la paroi latérale (121) par emboîtement d'un bord latéral vertical (125) de la paroi de fond (122) dans une gorge (124) du bord arrière vertical (123) replié de la paroi latérale (121).

## Patentansprüche

1. Modulares und erweiterbares Möbelstück, das mindestens zwischen zwei Platten unten (1) und oben (2), die jeweils zwei Kanten vorn (5) und hinten (6) aufweisen, mindestens ein Modul (3; 4) mit mindestens einer Seitenwand (14, 15) aufweist, versehen mit zwei Kanten unten (18) und oben (17), und eine hintere Bodenwand (16), die zwei Kanten unten (20) und oben (19) aufweist, die mit der Seitenwand (14, 15) zusammengebaut ist, wobei die Platten (1, 2) und das Modul (3; 4) so eingerichtet sind, dass das Modul (3; 4) entlang der Platten (1, 2) gleiten und geführt werden kann, um das mindestens eine Modul nach einem ersten Einbau des mindestens einen Moduls an der gewünschten Stelle zu platzieren, ohne dessen Struktur anzutasten, wodurch das Möbelstück modular und erweiterbar wird, wobei
das Möbelstück derart ist, dass
- die Platten (1, 2) zwei parallele ebene Flächen (7, 8) aufweisen,
- mindestens eine der Kanten (5, 6) jeder Platte (1, 2) eine Längsrippe (11; 12) aufweist, die senkrecht zu ihren ebenen Flächen (7, 8) hervorsteht, und
- das Modul (3; 4) längs und senkrecht zu seiner Seitenwand (14, 15) eingeschnitten (24, 25) ist, um auf den Rippen (11; 12) der Platten (1, 2) einrasten und so entlang dieser Rippen (11; 12) gleiten zu können.

2. Möbelstück nach Anspruch 1, wobei nur eine Plattenkante (6) eine Rippe (11; 12) aufweist.

3. Möbelstück nach einem der Ansprüche 1 und 2, wobei die Rippen (41, 43; 51, 52) und ihre Platte (40; 50) im Profil ein L bilden.

4. Möbelstück nach Anspruch 3, wobei die Platte (2), die mit ihrer Rippe (12) im Profil ein L bildet, eine obere Platte ist und das Möbelstück nur eine Reihe von Modulen (3; 4) aufweist.

5. Möbelstück nach einem der Ansprüche 1 und 2, wobei auf mindestens einer der Platten (1, 2) zwei Längsrippen oben (11) und unten (12) vorgesehen sind, die senkrecht zu den ebenen Flächen (7, 8) der einen Platte (1, 2) in Verlängerung zueinander und als Teile einer Lamelle (10) vorstehen, die im Profil mit der einen Platte (1, 2) ein T bildet.

6. Möbelstück nach einem der Ansprüche 1 und 2, wobei auf mindestens einer der Platten (40; 50) zwei Rippen (41, 43; 51, 52) vorgesehen sind, die jeweils auf den beiden Seiten des einen Platte befestigt und zueinander versetzt sind.

7. Möbelstück nach Anspruch 6, wobei die beiden Rippen (41, 43) in der Nähe der Hinterkante (42) der einen Platte befestigt sind.

8. Möbelstück nach einem der Ansprüche 1 bis 5, wobei die Rippen (10, 11, 12) eine mit dem Rand (9) der Hinterkante (6) der Platten koplanare Flanke aufweisen.

9. Möbelstück nach einem der Ansprüche 1 bis 8, wobei, wenn die Bodenwand (16) mit der Hinterkante (23) der Seitenwand (14, 15) zusammengebaut ist, das Modul gemäß zwei Längsnuten (24) eingeschnitten ist, die jeweils in der unteren (20) und oberen (19) Kante der Bodenwand (16) ausgebildet sind und sich in der unteren (18) und oberen (17) Kante seiner Seitenwand (14, 15) fortsetzen, um mit den Rippen (11, 12) der unteren und oberen Platten (1, 2) zusammenwirken.

10. Möbelstück nach einem der Ansprüche 1 bis 9, wobei das Modul (3; 4) zwei Seitenwände (14, 15) aufweist, die jeweils mit zwei Kanten, eine unten (18) und eine oben (17), versehen sind, und eine hintere Bodenwand (16), die zwei Kanten, eine unten (20) und eine oben (19), aufweist, und mit den Seitenwänden (14, 15) zusammengebaut ist, wobei das Modul (3; 4) längs und senkrecht zu seinen Seitenwänden (14, 15) eingeschnitten (24, 25) ist.

11. Möbelstück nach Anspruch 10, wobei das Modul (3; 4) gemäß mindestens einer Längsnut (24) zum Zusammenwirken mit einer in der Bodenwand (16) ausgebildeten und durch Einschnitte (25) in den Seitenwänden (14, 15) verlängerten Rippe (11; 12) eingeschnitten ist.

12. Möbelstück nach Anspruch 11, wobei zwei Nuten (24) in der oberen (19) und unteren (20) Kante der Bodenwand (16) des Moduls (3; 4) vorgesehen sind, die durch Einschnitte (25) in den Seitenwänden (14, 15) verlängert werden.

13. Möbelstück nach Anspruch 11, wobei die Seitenwände (14, 15) des Moduls (3; 4) Einschnitte (34) zum Zusammenwirken mit einer Plattenrippe (11; 12) aufweisen.

14. Möbelstück nach Anspruch 10, wobei das Modul (30) nur durch in den Seitenwänden (31, 32) des Moduls ausgebildete Einschnitte (34) eingeschnitten ist.

15. Möbelstück nach einem der Ansprüche 1 bis 9, wobei, wenn das Modul (60; 100; 110) nur eine einzige Seitenwand (61; 80; 101) aufweist, die Bodenwand (62; 81; 103) unterhalb ihrer hinteren Kante (63; 84; 104) mit der Seitenwand zusammengebaut ist.

16. Möbelstück nach Anspruch 15, wobei, wenn das Modul (60) einen hinterem Dieder (64) zum Zusammenbauen der Bodenwand (62) und der Seitenwand (61) aufweist, sich ein kleiner Stützbalken (65) im Dieder zwischen der oberen und unteren Kante der Bodenwand (62) und der Seitenwand (61, 66, 67) erstreckt, wobei der kleiner Balken (65) gemäß zwei Längseinschnitte (64) eingeschnitten ist, die jeweils in seiner oberen und unteren Kante ausgebildet sind und sich in der hinteren Kante (63) der Seitenwand (61) fortsetzen (71, 72), aus der Bodenwand (62) herausragend, um mit den Rippen (11, 12) der oberen und unteren Platten (2, 1) zusammenzuwirken.

17. Möbelstück nach Anspruch 16, wobei die Kante (68) der Bodenwand (62), die ihrer mit der Seitenwand (61) zusammengebauten Kante (69) gegenüberliegt, mit einem Barett (70) versehen ist, der sich gegenüber dem kleiner Stützbalken (65) erstreckt und so eingerichtet ist, dass sie mit den Rippen (11, 12) der oberen und unteren Platten (2, 1) durch einen oberen und unteren Einschnitt (74) zusammenwirkt.

18. Möbelstück nach einem der Ansprüche 1 bis 17, wobei die Platten (1, 2) und das Modul (3, 4; 30; 60) aus Holz bestehen.

19. Möbelstück nach Anspruch 15, wobei die Seitenwand (80) und die Bodenwand (81) aus Metall bestehen und miteinander verschweißt sind.

20. Möbelstück nach Anspruch 19, wobei sich die Bodenwand (81) direkt senkrecht zur Hinterkante (84) der Seitenwand (80) erstreckt und gegenüber der Seitenwand (80) einen im Wesentlichen rechtwinklig nach vorne in Bezug auf die Bodenwand (81) umgebogenen Umschlag (83) aufweist.

21. Möbelstück nach Anspruch 15, wobei die Seitenwand (101) und die Bodenwand (103) aus derselben Metallplatte gebildet sind.

22. Möbelstück nach Anspruch 21, wobei sich die Bodenplatte (103) diesseits der vertikalen Hinterkante (104) der Seitenwand (101) und einer die beiden Wände (101, 103) verbindenden gebogenen Ecke (102) erstreckt.

23. Möbelstück nach Anspruch 22, wobei die Bodenwand (103) durch ein Stabilisierungsbarett (105) verlängert ist, der im Wesentlichen um 90° nach hinten gebogen und der gebogenen Ecke (102) zugewandt angeordnet ist, wobei die Seitenwand (101), die gebogene Ecke (102) und das Stabilisierungsbarett (105) mit Einschnitten (106-109) für das Zusammenwirken mit den Rippen der Platten (1, 2) versehen sind.

24. Möbelstück nach einem der Ansprüche 1 bis 17, wobei die Platten und das Modul aus Metallmaterial bestehen.

25. Möbelstück nach einem der Ansprüche 1 bis 24, das mehr als zwei Platten und mindestens zwei Module aufweist.

26. Möbelstück nach einem der Ansprüche 1 bis 9, wobei, wenn das Modul (120) aus Metall besteht und nur eine einzige Seitenwand (121) aufweist, die Bodenwand (122) mit der Seitenwand (121) durch Einstecken einer vertikalen Seitenkante (125) der Bodenwand (122) in eine Rille (124) der umgebogenen vertikalen Hinterkante (123) der Seitenwand (121) zusammengebaut wird.

## Claims

1. Modular and scalable piece of furniture comprising, at least between two low (1) and high (2) boards each having two front (5) and rear (6) edges, at least one module (3 ; 4) with at least one side wall (14, 15), provided with two low (18) and high (17) edges, and a rear bottom wall (16) having two low (20) and high (19) edges and assembled to the side wall (14, 15), the boards (1, 2) and the module (3; 4) being arranged to allow the module (3; 4) to slide and be guided along the boards (1, 2), in such a way as to place the at least one module where it is desired after a first installation of the said at least module, without touching its structure, making the piece of furniture modular and scalable, piece of furniture such that
- the boards (1, 2) have two parallel planar surfaces (7, 8),
- at least one of the edges (5, 6) of each board (1, 2) comprises a longitudinal rib (11; 12) projecting perpendicularly to its planar surfaces (7, 8), and
- the module (3; 4) is indented (24, 25) longitudinally and perpendicularly to its side wall (14, 15) in order to be able to fit onto the ribs (11; 12) of the boards (1, 2) and thus slide along these ribs (11; 12).

2. Piece of furniture according to claim 1, wherein only one board edge (6) comprises a rib (11; 12).

3. Piece of furniture according to one of claims 1 and 2, wherein the ribs (41, 43; 51, 52) and their board (40; 50) form an L in profile.

4. Piece of furniture according to claim 3, wherein the board (2), forming an L with its rib (12) in profile, is a high board and the piece of furniture comprises only one row of modules (3; 4).

5. Piece of furniture according to one of claims 1 and 2, wherein there are provided, on at least one of the boards (1, 2), two pupper (11) and lower (12) longitudinal ribs, projecting perpendicularly to the planar surfaces (7, 8) of said one board (1, 2), as an extension of each other and parts of a slat (10) forming with said one board (1, 2) a T in profile.

6. Piece of furniture according to one of claims 1 and 2, wherein there are provided, on at least one of the boards (40; 50), two ribs (41, 43; 51, 52) attached respectively to the two faces of said one board and offset from each other.

7. Piece of furniture according to claim 6, wherein the two ribs (41, 43) are attached near the rear edge (42) of said one board.

8. Piece of furniture according to one of claims 1 to 5, wherein the ribs (10, 11, 12) have a front flank coplanar with the rim (9) of the rear edge (6) of the boards.

9. Piece of furniture according to one of claims 1 to 8, wherein, the bottom wall (16) being assembled to the rear edge (23) of the side wall (14, 15), the module is indented in two longitudinal grooves (24) formed respectively in the low (20) and high (19) edges of the bottom wall (16) and extending into the low (18) and high (17) edges of its side wall (14, 15) to cooperate with the ribs (11, 12) of the low and high boards (1, 2).

10. Piece of furniture according to one of claims 1 to 9, wherein the module (3; 4) comprises two side walls (14, 15), each provided with two low (18) and high (17) edges, and a rear bottom wall (16) having two low (20) and high (19) edges, and assembled to the side walls (14, 15), the module (3; 4) being indented (24, 25) longitudinally and perpendicularly to its side walls (14, 15).

11. Piece of furniture according to claim 10, wherein the module (3; 4) is indented in at least one longitudinal groove (24) for cooperation with a rib (11; 12), formed in the bottom wall (16) and extended by notches (25) in the side walls (14, 15) for cooperation with a rib (11; 12).

12. Piece of furniture according to claim 11, wherein there are provided two grooves (24) in the high (19) and low (20) edges of the bottom wall (16) of the module (3; 4), extended by notches (25) in the side walls (14, 15).

13. Piece of furniture according to claim 11, wherein the side walls (14, 15) of the module (3; 4) comprise notches (34) for cooperation with a board rib (11; 12).

14. Piece of furniture according to claim 10, wherein the module (30) is indented only by notches (34) formed in the side walls (31, 32) of the module.

15. Piece of furniture according to one of claims 1 to 9, wherein, the module (60; 100; 110) comprising only one side wall (61; 80; 101), the bottom wall (62; 81; 103) is assembled to the side wall ahead of its rear edge (63; 84; 104).

16. Piece of furniture according to claim 15, wherein the module (60) comprising a rear dihedral (64) for assembling the bottom wall (62) and the side wall (61), a small buttress beam (65) extends in the dihedral between the high and low edges of the bottom wall (62) and the side wall (61, 66, 67), the small beam (65) being indented in two longitudinal notches (64) formed respectively in its high and low edges and extending (71, 72) into the rear edge (63) of the side wall (61), projecting out of the bottom wall (62) to cooperate with the ribs (11, 12) of the high and low boards (2, 1).

17. Piece of furniture according to claim 16, wherein the edge (68) of the bottom wall (62), opposite its assembly edge (69) to be assembled with the side wall (61), is provided with a small bar (70) extending in line with the small buttress beam (65) and arranged to cooperate with the ribs (11, 12) of the high and low boards (2, 1) by high and low indentations (74).

18. Piece of furniture according to one of claims 1 to 17, wherein the boards (1, 2) and the module (3, 4; 30; 60) are made of wood.

19. Piece of furniture according to claim 15, wherein the side wall (80) and the bottom wall (81) are made of metal and welded to each other.

20. Piece of furniture according to claim 19, wherein the bottom wall (81) extends directly perpendicularly to the rear edge (84) of the side wall (80) and comprises, opposite the side wall (80), a flange (83) bent substantially at right angle forward with respect to the bottom wall (81).

21. Piece of furniture according to claim 15, wherein the side wall (101) and the bottom wall (103) are formed in a single metal plate.

22. Piece of furniture according to claim 21, wherein the bottom plate (103) extends ahead of the vertical rear edge (104) of the side wall (101) and of a bending ridge (102) joining the two walls (101, 103).

23. Piece of furniture according to claim 22, wherein the bottom wall (103) is extended by a small stabilizing bar (105), bent substantially to 90° rearward and disposed facing the bending ridge (102), the side wall (101), the bending ridge (102) and the small stabilizing, bar (105) are provided with notches (106-109) for cooperation with the ribs of the boards (1, 2).

24. Piece of furniture according to one of claims 1 to 17, wherein the boards and the module are made of metallic material.

25. Piece of furniture according to one of claims 1 to 24, comprising more than two boards and at least two modules.

26. Piece of furniture according to one of claims 1 to 9, wherein, the module (120) made of metal and comprising only one side wall (121), the bottom wall (122) is assembled to the side wall (121) by interlocking of a vertical side edge (125) of the bottom wall (122) into a groove (124) of the bent vertical rear edge (123) of the side wall (121).
